# EUROPEAN PATENT APPLICATION

(11) **EP 0 702 205 A2**
(43) Date of publication of application: **20.03.1996**
(21) Application number: 95305785.8
(22) Date of filing: 18.08.1995
(51) Int. Cl.: G01B 9/02

(54) **Interferometer**

(30) Priority: 16.09.1994 GB 9418738
(71) Applicant: QUEENSGATE INSTRUMENTS LIMITED, Bracknell, Berkshire, RG12 1RB (GB)
(72) Inventor: Hicks, Thomas Rudolph, Chiswick, London, W4 3HR (GB)
(74) Representative: Roberts, Gwilym Vaughan

(57) **Abstract**

A Michelson-type interferometer comprises a beam splitter (10) and a movable mirror assembly (11). The mirror assembly (11) is mounted on a backplate (13) by means of three piezoelectric actuators (12). A movable mirror element (14) is mounted on the backplate (13) in the path of light passing through the beam splitter (10). The rigid construction of the mirror (14) attached to the beam splitter (10) through the backplate (13) and the actuators (12) provides a temporally stable structure.

## Description

The present invention relates to interferometers. The invention finds particular, though not exclusive, application in a dual wave length Michelson-type interferometer.

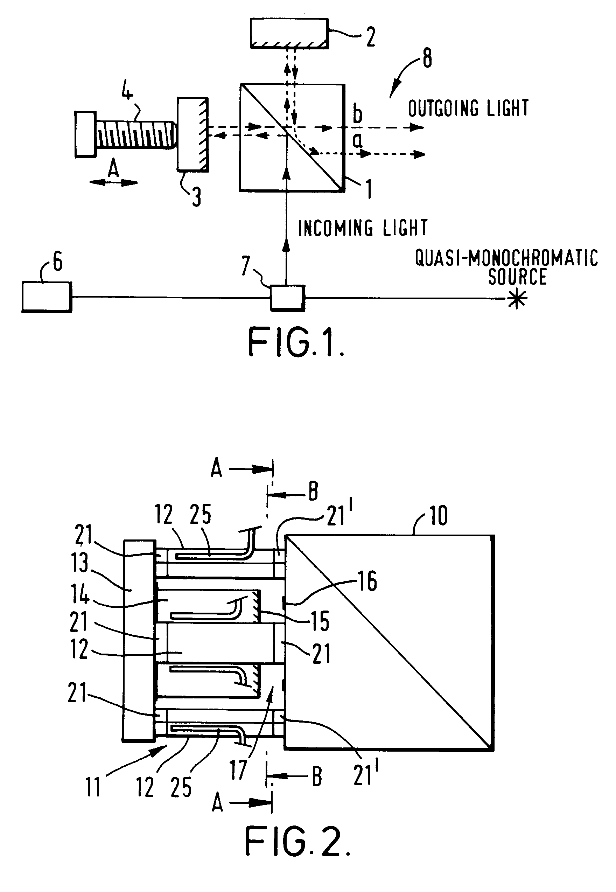

Known interferometers of the Michelson type comprise a fixed mirror assembly, a movable mirror assembly and a beam splitter. Such an arrangement is shown schematically in Figure 1. Light from a quasi-monochromatic source is fed to a sensor 6 through a first beam-splitter 7. This sensor 6 may detect some physical property such as temperature, pressure etc. A fraction of the reflected signal from the sensor is fed to a sensing interferometer 8, again via the beam splitter 7.

The optical path difference within the sensor is chosen to be much larger than the coherence length of the source so that no interference is observed at the sensor. The optical path difference within the interferometer is chosen to match that within the sensor accurately. Only now, at the output of the interferometer, may interference fringes be observed.

On entering the interferometer, the beam is split by a second beam splitter 1. Half of the beam passes straight to the fixed mirror 2 and half of it is reflected to the movable mirror 3. Light reflected from the fixed mirror 2 will in part be reflected at the second beam splitter to the output (path a), whilst light reflected from the movable mirror 3 will in part be transmitted through the beam splitter to the output (path b). Interference fringes characteristic of the path difference between the sensor and the interferometer are produced.

The position of the movable mirror is adjusted manually in the direction shown by the arrow A using an accurately machined screw 4. The path difference between light from the sensor and light through the interferometer is altered. The resulting change in intensity of light at the output is measured to give an indication of the change in path length between sensor and interferometer.

A limitation of such an interferometer is the inevitable periodic nature of the output, which means that the instrument has only a limited dynamic range. Dynamic range can be dramatically improved by using two quasi-monochromatic light sources, of slightly different wavelengths and analysing the phase difference between the two wavelengths of light coming from the sensor to determine the fringe number.

It is of great importance that the optical path difference between the two arms of the interferometer is adjusted and maintained with high precision. This is because a similar output will be observed whether a change in path length occurs within the sensor or within the interferometer itself. It is accordingly desirable to be able to maintain the path difference within the interferometer to sub-nanometre accuracy for several hours at a time. Clearly, a screw thread system, however accurately machined, will reach a limit of possible resolution well before the nanometric range.

According to the present invention, an interferometer comprises a beam splitter and a movable mirror assembly adjacent the beam splitter, the assembly comprising at least one actuator mounted, by one end, on the beam splitter, a backplate mounted on the other end of the or each piezoelectric actuator, and a movable mirror element attached to the backplate.

Preferably, the actuator is a piezoelectric actuator. The use of one or more piezoelectric actuators allows the position of the mirror to be adjusted and maintained with high precision. In particular, the rigid construction of the apparatus, such that the movable mirror is mechanically attached via the backplate and actuator(s) to the beam splitter, provides the interferometer with extremely high temporal stability.

Preferably, the actuator or each actuator is electrically connected to a source of electric control signals, whereby the or each actuator may be deformed on application of a control signal to alter the position of the movable mirror element. This adjustability further enhances the stability and accuracy to which the interferometer may be maintained.

In a preferred embodiment, a first plate of a plate capacitor is mounted upon the movable mirror element, and a second plate of a plate capacitor is mounted upon the beam splitter.

The capacitance of the capacitor is used to sense the position of the mirror. This method is exceptionally accurate, enabling changes in position of under one nanometre to be measured. The device is also relatively simple and provides a direct conversion of the position of the movable mirror into an electrical signal. The relationship between position and signal voltage is linear and there is substantially no hysteresis.

Preferably, the first plate of the capacitor is constituted by an electrically conductive film on the movable mirror element, which film also provides the mirror element of the movable mirror assembly. The construction is simplified by the use of a film of reflective material both to provide the surface of the mirror and also one plate of the capacitor.

Preferably, the second capacitor plate is fixed in position relative to the movable mirror element, the second plate further being arranged opposite the reflective surface of the movable mirror. The second plate is preferably in the shape of a ring, such as an annulus, arranged to surround the optical path between the beam splitter and the movable mirror element. This avoids the second capacitor plate obstructing light passing from the beam splitter to the movable mirror. The centre of the capacitance by which the mirror displacement is sensed is also the centre of the beam path. Thereby, errors are minimised should the mirror be tilted out of a plane perpendicular to the beam axis.

The second capacitor plate is conveniently constituted by an electrically conductive film on the surface of the beam splitter. The film on the first and second capacitor plates, i.e. on the movable mirror and on the beam splitter, is preferably of gold, being highly reflective, highly electrically conductive, and chemically inert.

Preferably, capacitance sensing means are electrically connected to the capacitor whereby, as the capacitance of the capacitor varies with the position of the movable mirror element, the position of the element may be sensed.

In a preferred embodiment, the capacitance sensing means are connected to the control signal source, and the sensing means, piezoelectric element or elements, control signal source and electrical connections therebetween constitute a servo system for controlling the position of the movable mirror element. Thereby, fluctuations in the position of the mirror due to e.g. actuator "creep", random fluctuations in the voltage supplied to the actuators, or temperature expansion/contraction of components may be continuously compensated for.

The interferometer preferably further comprises a fixed mirror assembly, a first mounting assembly for an optical fibre providing an input to the interferometer, and a second mounting assembly for an optical fibre providing an output from the interferometer to an optical detector.

The movable mirror assembly, fixed mirror assembly, beam splitter and said first and second mounting assemblies may, preferably, be mounted on a unitary base. Thus, the relative positions of all the components of the interferometer, and consequently the path length between the components, is stably maintained. In conjunction with the rigid construction of the movable mirror assembly, stability in excess of ten hours has been achieved.

Further features and advantages of the present invention will be apparent from the following specific description of an exemplary embodiment, which is made with reference to the accompanying drawings in which:-
Figure 1 shows the arrangement of a typical prior art sensor and Michelson interferometer.
Figure 2 is a schematic side view of a beam splitter and movable mirror assembly from an interferometer in accordance with the invention;
Figure 3 is a section on BB in Figure 2; and
Figure 4 is a section on AA in Figure 2; and
Figure 5 is a schematic plan view of the interferometer of which part is shown in Figure 2.

An interferometer incorporating the invention will now be described with reference to Figures 2 to 5.

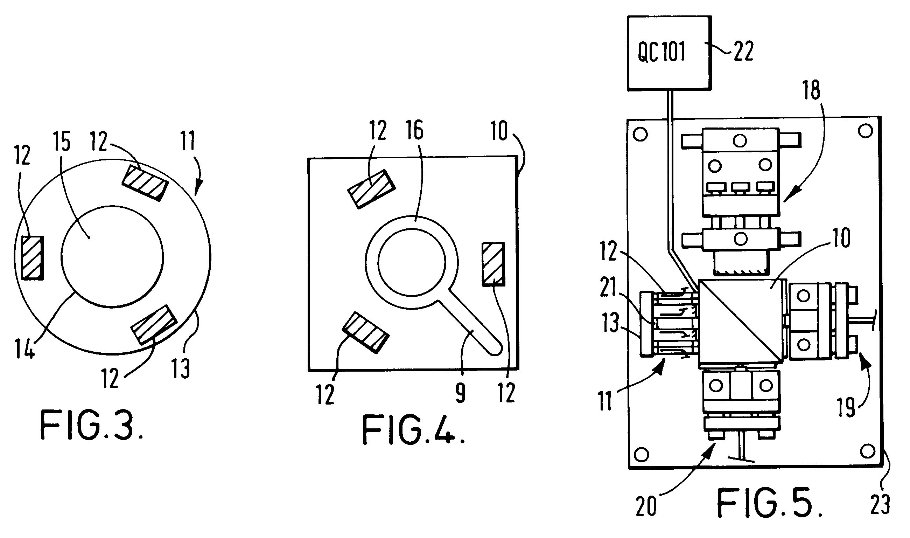

Figure 2 shows a beam splitter 10 and movable mirror assembly 11. On the other three sides of the splitter 10 are located a fixed mirror assembly 18, output optical fibre mounting means 19 and input optical fibre mounting means 20 which are of conventional arrangement and are shown in figure 5.

The splitter 10 is a non-polarising 50-50 beam splitter and comprises a cube of side 20mm and has faces which are anti-reflection coated for the wavelength range 700 to 900nm, which is the range in which the interferometer operates.

The moving mirror assembly 11 is mounted on the beam splitter via three piezoelectric actuators 12 of elongate cuboidal shape. The actuators are spaced equidistantly around the circumference of a notional circle. They may be made of any suitable piezoelectric material, e.g. laminated PZT-5H, and have dimensions 9 x 3 x 1.4mm.

Each end of the actuators has an optically flat glass end piece 21, 21'. One end piece 21' is glued to the splitter 10, the other end piece 21 being glued to a disc-shaped backplate 13. The disc-shaped backplate 13 has a diameter of 15mm and a thickness of 2.5mm, and is precision mounted on the rear of the movable mirror element 14. It serves mechanically to connect the actuators 12 with the movable mirror element 14.

The movable mirror element 14 is a cylinder of length 11mm., and is circular in cross-section, having a diameter of 9.5mm. The mirror surface is in the form of a gold disc 15 coating one end of the movable mirror 14. The end face of the mirror has a flatness of approximately λ/10 for the wavelength range concerned. An annular area 16 on the surface of the beam splitter 10 opposite the movable mirror 14 also carries a gold coating in the form of an annulus 16 coaxial with the disc 15. This gold coated annulus 16, together with the disc 15 on the movable mirror 14 constitute a parallel plate capacitor 17. A gold spur 9 (see Figure 4) leading from the annulus 16 on the beam splitter 10 provides an electrical contact. The disc 15 has a similar electrical contact (not shown) attached to it. The two contacts are used to derive a measure of the distance between the movable mirror and the beam splitter from the capacitance between the disc 15 and the annulus 16.

Connections 25 are made from the piezoelectric actuators 12 and from the disc 15 and annulus 16 of the capacitor to a controller 22, manufactured by Queensgate Instruments Ltd. as model number QC101. The capacitance between the disc 15 and the annulus 16 is measured by the controller to give an accurate indication of the position of the movable mirror 14. The controller supplies a variable potential difference of between -15V and +26V to the piezoelectric actuators 12 in response to the input from the capacitor 17 and thereby a servo control system is established. This "capacitance micrometer" system is capable of controlling the position of the mirror to sub-nanometre accuracy.

The movable and fixed mirror assemblies 11, 18, input and output optical fibre mounting means 20, 19 and beam splitter 10 are all rigidly mounted to a mounting plate 23.

By mounting the movable mirror 15 in the manner described above, a rigid structure is created. In particular, mounting of the movable mirror 15 onto an accurately machined backplate 13, which is itself firmly mounted onto the beam splitter by piezoelectric actuators 12 having highly polished glass end pieces, affords a highly stable structure. Very high precision positioning of the mirror coupled with long term stability has been demonstrated using this construction.

It will, of course, be apparent to one familiar with optical interferometry that the present invention may be carried into practise in a number of ways. For example, although the described embodiment utilises three piezoelectric actuators, it is envisaged that any other suitable number might be used.

## Claims

1. An interferometer comprising a beam splitter and a movable mirror assembly adjacent the beam splitter, the assembly comprising at least one actuator mounted, by one end, on the beam splitter, a backplate mounted on the other end of the or each actuator, and a movable mirror element attached to the backplate.

2. An interferometer as claimed in Claim 1 wherein the or each actuator is electrically connected to a source of electric control signals, whereby the or each actuator may be deformed on application of a control signal to alter the position of the movable mirror element.

3. An interferometer as claimed in Claim 1 or Claim 2, wherein a first plate of a plate capacitor is mounted upon the movable mirror element, and a second plate of a plate capacitor is mounted upon the beam splitter.

4. An interferometer as claimed in Claim 3, wherein the first plate of the capacitor is constituted by an electrically conductive film on the movable mirror element, which film also provides the mirror element of the movable mirror assembly.

5. An interferometer as claimed in Claim 4 wherein the second plate of the plate capacitor is fixed in position relative to the movable mirror element, the second plate further being arranged opposite the reflective surface of the movable mirror.

6. An interferometer as claimed in any one of Claims 3, 4 or 5 wherein the second plate is preferably in the shape of a ring, such as an annulus, arranged to surround the optical path between the beam splitter and the movable mirror element.

7. An interferometer as claimed in any one of Claims 3-6, wherein the second capacitor plate is constituted by an electrically conductive film on the said surface of the beam splitter.

8. An interferometer as claimed in Claim 4 or Claim 7, wherein the electrically conductive films constituting the first and second capacitor plates are gold.

9. An interferometer as claimed in any one of Claims 3-8, further comprising capacitance sensing means electrically connected to the capacitor, whereby, as the capacitance of the capacitor varies with the position of the movable mirror element, the position of the element relative to the beam splitter may be sensed.

10. An interferometer as claimed in Claim 9, wherein the capacitance sensing means are connected to the said control signal source, and the sensing means, actuator, control signal source and electrical connections therebetween constitute a servo system for controlling the position of the movable mirror element.

11. An interferometer as claimed in any one of the preceding Claims, further comprising a fixed mirror assembly, a first mounting assembly for an optical fibre providing an input to the interferometer, and a second mounting assembly for an optical fibre providing an output to the interferometer.

12. An interferometer as claimed in any one of the preceding Claims, in which the movable mirror assembly, fixed mirror assembly, beam splitter and said first and second mounting assemblies are mounted on a unitary base.

13. An interferometer as claimed in any of the preceding claims in which the or each actuator is a piezoelectric actuator.
